Europäisches Patentamt

(19) European Patent Office

Office européen des brevets

(11) Numéro de publication: **0070748**
**B1**

(12) # FASCICULE DE BREVET EUROPEEN

(45) Date de publication du fascicule du brevet:
31.07.85

(51) Int. Cl.⁴: **B 62 D 33/06**

(21) Numéro de dépôt: **82401141.5**

(22) Date de dépôt: **22.06.82**

(54) **Cabine de véhicule transporteur routier.**

(30) Priorité: **22.07.81 FR 8114232**

(43) Date de publication de la demande:
**26.01.83 Bulletin 83/4**

(45) Mention de la délivrance du brevet:
**31.07.85 Bulletin 85/31**

(84) Etats contractants désignés:
**AT BE CH DE FR GB IT LI LU NL SE**

(56) Documents cités:
**DE - A - 2 838 150**
**FR - A - 2 402 571**
**US - A - 4 121 684**
**US - A - 4 201 415**

**M.A.N. FORSCHEN PLANEN BAUEN, no.11, avril 1980,
Augsburg (DE) W.SCHMIDT:"Vario-System - ein neues
Konzept für Nutzfahrzeuge",pages 54-59
SOLDAT UND TECHNIK, vol.23, no.7, juillet 1980,
Frankfurt a/Main (DE) "Man-X90-Prototyp rollt
bereits",page 388
MACHINE DESIGN, vol.52, no.2, janvier 1980, Ohio (US)
"Trucker on the road takes home with him",page 18**

(73) Titulaire: **RENAULT VEHICULES INDUSTRIELS Société
Anonyme dite:, 129 rue Servient "La Part Dieu",
F-69003 Lyon (FR)**

(72) Inventeur: **Gandini, Marcello, Via Rosta 40, Villarbasse
Turin (IT)**

(74) Mandataire: **Ernst-Schonberg, Michel et al, R.N.U.R.
S. 0804 B.P. 103 8 & 10, avenue Emile-Zola,
F-92109 Boulogne Billancourt (FR)**

## Description

L'invention concerne une cabine de véhicule transporteur routier qui comporte un poste de conduite avec un siège de conducteur et et un siège de passager et des aménagements intérieurs comprenant au moins un réchaud, un cabinet de toilette, une table et des couchettes et qui est divisée en deux parties situées à deux niveaux différents, la partie supérieure étant séparée de la partie inférieure par une cloison de séparation, et communiquant entr'elles par une série de marches (US-PS-4 201 415).

L'invention a pour but de perfectionner une cabine de véhicule de ce genre, de façon à qu'elle présente une habitabilité aussi grande que possible sans que cela nuise aux conditions de visibilité et de manoeuvre du véhicule, ni à la fonctionnalité du poste de conduite.

On sait que le transport routier sur longues distances nécessite des véhicules dont les cabines spécialement aménagées suppléent au manque des relais étapes. Dans ces cas, la cabine du véhicule doit constituer le lieu d'habitation et de couchage du conducteur et de son équipier.

On connait par la publication FR-A-2 401 571 un poste de conduite et une cabine de couchettes à plusieurs fonctions situés à des niveaux différents.

La publication US-A-4 201 415 décrit une cabine de conduite divisée en deux parties situées à des niveaux différents comprenant un réchaud et un cabinet de toilette situés au niveau inférieur conjointement avec le poste de conduite tandis que la table et les couchettes sont situées au niveau supérieur.

Ces dispositions, si elles répondent aux besoins de confort du conducteur et de son passager, nécessitent par contre un espace relativement important si bien que le volume d'habitabilité de la cabine sensiblement augmenté conduit à une construction volumineuse dans laquelle l'espace habitable n'est pas correctement distribué.

L'invention à par conséquent pour objet une redistribution rationnelle de la surface et du volume habitable d'une cabine de conduite de véhicule inspiré des solutions d'implantation connues réservées au nautisme.

L'invention part de l'idée que dans une cabine de véhicule du type précité, la disposition du poste de conduite et de la cellule d'habitation avec ses aménagements doivent être séparés dans le but de procurer au conducteur et au passager un confort accru.

Selon l'invention, dans une du type précité ce problème est résolu par le fait que la série de marches est située dans la région médiane longitudinale de la cabine, tandis que le poste de conduite qui est situé dans la partie supérieure possède la cloison de séparation supportant les sièges du conducteur et du passager qui se prolonge vers le haut jusqu'à un niveau supérieur auxdits sièges, puis vers l'arrière pour former le plus haut niveau du plafond de la partie inférieure qui reçoit les aménagements intérieurs.

Cette disposition de base, dans laquelle le poste de conduite est séparé de la cellule d'habitation avec ses aménagements intérieurs, procure au conducteur et à son équipier un confort accru du fait que la cellule d'habitation pourra être agencée dans un style personnalisé. Par contre la fonction du poste de conduite restant inchangée, celui-ci pourra être étudie de manière ergonomique dans un style relativement libre.

Un autre avantage de la disposition de base réside dans le fait que le réchaud de cuisine et l'évier de toilette restent séparés de sorte que l'on obtient des conditions plus favorables d'accès au réchaud et à l'évier de toilette avec une disposition avantageuse en ce qui concerne la cabine comme lieu d'habitation, de repos et de couchage qui permet ainsi de loger de façon aisée les autres aménagements intérieurs.

Pour la disposition selon l'invention, un mode de réalisation avantageux est caractérisé par le fait que la paroi du poste de conduite qui porte les sièges du conducteur et du passager s'étend au dessus desdits sièges dans un plan situé au niveau du plafond de la cellule d'habitation située à la partie inférieure de la cabine.

Cette particularité permet au conducteur et à son équipier d'occuper la station debout par exemple lors de l'accès à l'évier et au réchaud.

Cette disposition de paroi du poste de conduite est par ailleurs avantageuse pour la constitution de l'aire de couchage et de repos. A cet effet, deux couchettes sont respectivement disposées de part et d'autre de la région médiane longitudinale de la cellule d'habitation et sont d'un accès d'autant plus aisé que les utilisateurs peuvent passer de la station debout ou assise à la position couchée sans contorsions.

L'invention sera expliquée plus précisément ci-après en référence au dessin annexé sur lequel:

— la figure 1 est une élévation latérale d'une cabine sur laquelle la porte d'accès et les marches d'entrée sont indiquées en tirets.

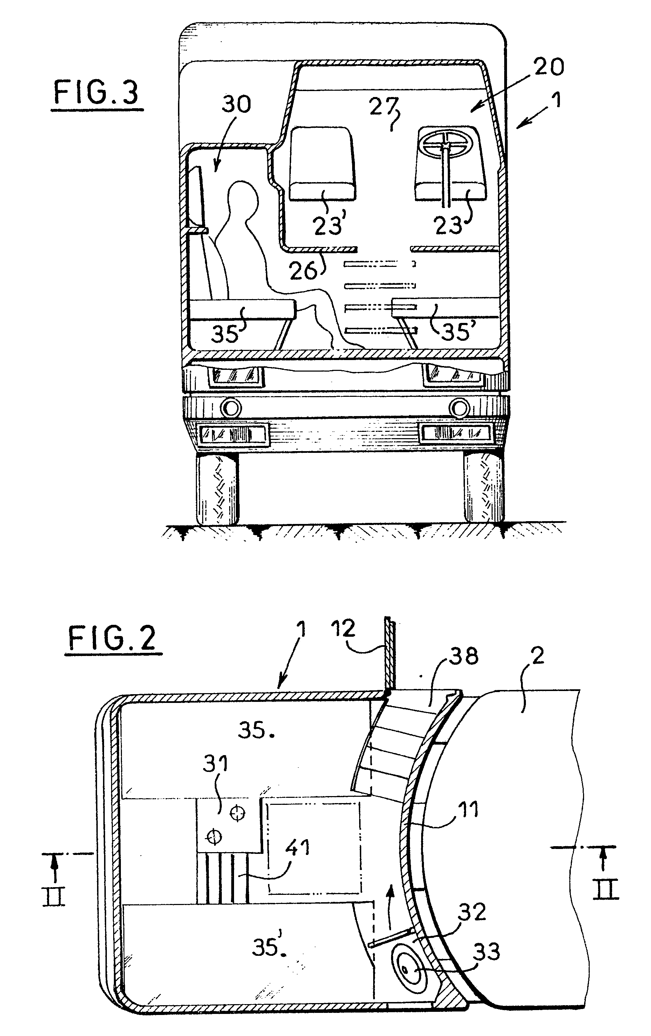

— La figure 2 est une vue en plan de la cabine représentée à la figure 1 au niveau de la cellule d'habitation.

— La figure 3 est une vue en élévation frontale de la cabine au niveau d'un plan transversal passant par les marches d'accès au poste de conduite.

Sur le dessin, on a désigné par 1 la cabine d'un transporteur routier. A l'intérieur de la cabine 1 sont situés le poste de conduite 20 et la cellule d'habitation 30. Le poste de conduite 20 est limité par son pare-brise 21 et possède ainsi que cela est bien connu, une planche de bord 22 qui porte les divers organes de commande et instruments de contrôle de la marche du véhicule.

Dans le poste de conduite sont disposés de façon usuelle le siège 23 du conducteur et le siège 23' du passager. Devant le siège 23 est disposé le volant 24 et le pédalier 25 ainsi que cela est bien connu. Les sièges 23, 23' sont supportés par une cloison de séparation 27 qui prolonge vers le haut le plancher 26 du poste de conduite. La cloison 27 se prolonge ainsi vers le haut jusqu'à un niveau supérieur aux sièges 23, 23' puis vers l'arrière pour former le plus haut niveau du plafond 36 de la partie inférieure de la cabine qui reçoit les aménagement intérieurs.

La cellule d'habitation 30 située à la partie inférieure de la cabine communique avec le poste situé à partie supérieure au moyen d'une première série de marches 41 situées dans la région médiane longitudinale de la cabine.

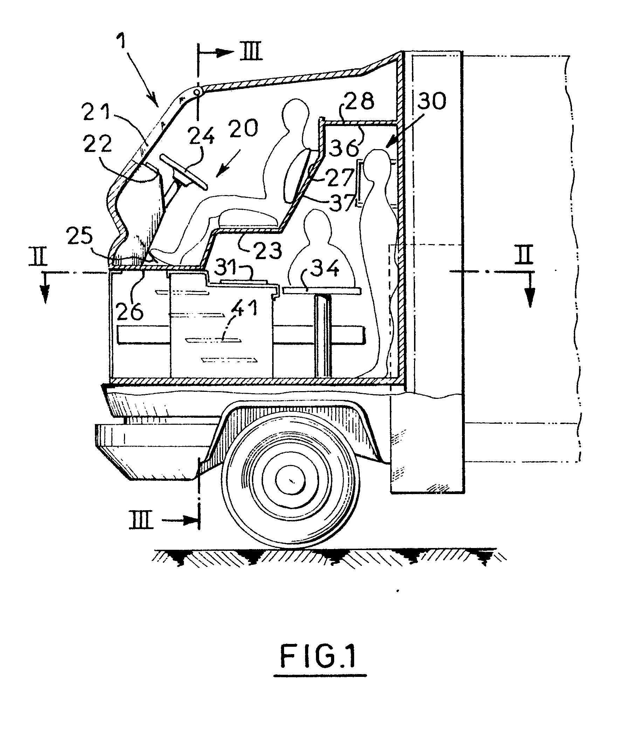

Les aménagements intérieurs de la cellule d'habitation sont constitués principalement par un réchaud 31, un cabinet de toilette 32 à évier 33, une table 34 et deux couchettes 35, 35' formant banquette. Le plafond 36 de la cellule d'habitation 30 est à plusieurs niveaux visibles à la figure 1. Le plus haut niveau du plafond 36 est sensiblement situé au dessus de la table 34 et du cabinet de toilette 32 et en partie au dessus des couchettes 35, 35'. Cette mesure construktive autorise la station debout des occupants de la cabine dans une zone importante de la cellule d'habitation puis-qu'elle contient le cabinet de toilette 32, les marches d'accès à cette cellule, la table 34 et les couchettes 35, 35'.

L'agencement précité, et du fait que le réchaud 31 et la table 34 sont l'un derrière l'autre, facilite également, en station debout ou assise, la confection des plats cuisinés ainsi que l'agencement de la table.

A cet effet, l'occupant de la cabine est en mesure d'assurer la surveillance du réchaud à partir des marches 41 sur l'une desquelles il pourra s'asseoir ou à partir de l'une des couchettes.

Selon une autre caractéristique de la disposition précitée, le niveau inférieur du plafond 36 s'étend au dessus du réchaud 31.

Le niveau inférieur se prolonge par une paroi oblique 37 jusqu'au niveau supérieur de ce même plafond. Selon une particularité de la cabine, la paroi oblique 37, opposée à la face de la paroi d'appui 27 du dossier du siège 23' du passager et située dans le poste de conduite, constitue le moyen de guidage et d'écoulement de l'air chaud dégagé par exemple lors de la cuisson des aliments, jusqu'au dispositif d'extraction de l'air vicié de la cabine.

Le niveau supérieur du plafond 36 s'étend ainsi au dessus de la portion de surface habitable de cellule 30 souhaitée pour respecter la station debout des occupants de la cabine.

D'autre part, la face arrière 11 de la cabine 1 est accolée au cabinet de toilette 32 et à une deuxième série de marches 38 d'accès à la cellule d'habitation. Selon le mode de réalisation représenté, la face 11 est une face courbe dont la concavité est tournée vers la remorque 2. La configuration courbe de la face 11 augmente la surface du cabinet de toilette 32 ainsi que la longueur de la série de marches 38. Ce détail possède son importance pour faciliter l'accès au niveau du plancer de la cellule d'habitation.

Selon une autre caractéristique de la cabine, les marches 38 constituent un escalier intérieur à la cabine. De ce fait, cet escalier peut être condamné par la porte latérale 12 d'accès à la cabine sans nuire à l'esthétique extérieure de la cabine, ni à son aérodynamisme.

L'agencement des aménagements intérieurs de la cellule d'habitation procure de la sorte un confort accru du fait que le réchaud 31 et la table 34 sont disposés dans la région médiane longitudinale, l'une derrière l'autre entre les couchettes 35, 35' et à côté des marches d'accès 41 au poste de conduite. On réalise de la sorte un agencement de cabine de véhicule routier dont le confort est comparable à celui qui peut être obtenu dans une caravanue, ce qui répond au but recherché.

## Revendications

1. Cabine de véhicule transporteur routier qui comporte un poste de conduite (20) avec un siège de conducteur (23) et un sège de passager (23') et des aménagements intérieurs comprenant au moins un réchaud (31), un cabinet de toilette (32) une table (34) et des couchettes (35, 35') et qui est divisée en deux parties situées à deux niveaux différents, la partie supérieure étant séparée de la partie inférieure par une cloison de séparation (27), et communiquant entr'elles par une série de marches (41), caractérisée par le fait que la série de marches (41) est située dans la région médiane longitudinale de la cabine, tandis que le poste de conduite (20) qui est situé dans la partie supérieure possède la cloison de séparation (27) supportant les sièges du conducteur (23) et du passager (23') qui se prolonge vers le haut jusqu'à un niveau supérieur auxdits sièges (23, 23') puis vers l'arrière pour former le plus haut niveau du plafond (36) de la partie inférieure qui reçoit les aménagements intérieurs.

2. Cabine selon la revendication 1, caractérisée par le fait que la plus haut niveau du plafond (36) de la cellule d'habitation s'étend au dessus de la table (34), du cabinet de toilette (32) et partiellement au dessus des couchettes (35, 35').

3. Cabine selon l'une quelconque des revendications 1 ou 2, caractérisée par le fait que la face arrière (11) de la cabine est accolée au cabinet de toilette (32).

4. Cabine selon la revendication 3, caractérisée par le fait que la face arrière (11) de la cabine est accolée à une deuxième série de marches (38) d'accès à la cellule d'habitation.

5. Cabine selon la revendication 4, caractérisée par le fait que la deuxième série de marches d'accès (38) à la cellule d'habitation est à l'intérieur de la cabine.

6. Cabine selon l'une quelconque des revendications 1 à 5, caractérisée par le fait que le réchaud (31) et la table (34) sont disposés dans la région médiane longitudinale de la cellule d'habitation l'une derrière l'autre entre les couchettes (35, 35') et à côté de la première série de marches (41) accédant au poste de conduite (20).

## Patentansprüche

1. Führerhaus für Straßentransportfahrzeuge, das einen Führerstand (20) aufweist mit einem Fahrersitz (23) und einem Beifahrersitz (23') sowie Inneneinrichtungen, die wenigstens einen Kocher (31), eine Waschkabine (32), einen Tisch (34) und Schlafkojen (35, 35') umfassen und das in zwei auf unterschiedlichen Niveaus angeordnete Teile unterteilt ist, wobei das obere Teil vom unteren Teil durch eine Trennwand (27) getrennt ist und die miteinander über eine Stufenreihe (41) verbunden sind, dadurch gekennzeichnet, daß die Stufenreihe (41) im mittleren Längsbereich des Führerhauses angeordnet ist, während der Führerstand (20), der im oberen Teil angeordnet ist, die Trennwand (27) enthält, die den Fahrersitz (23) und den Beifahrersitz (23') trägt und die sich nach oben bis zu einer Höhe oberhalb der Sitze (23, 23') erstreckt sowie nach hinten um den obersten Deckenanschluß (36) des unteren Teils zu bilden, daß die Inneneinrichtungen aufnimmt.

2. Führerhaus nach Anspruch 1, dadurch gekennzeichnet, daß der oberste Deckenanschluß (36) der Wohnzelle sich oberhalb des Tisches (34), des Waschraums (32) und teilweise oberhalb der Schlafkojen (35, 35') erstreckt.

3. Führerhaus nach einem der Ansprüche 1 oder 2, dadurch gekennzeichnet, daß die Rückwand (11) des Führerhauses mit dem Waschraum (32) verbunden ist.

4. Führerhaus nach Anspruch 3, dadurch gekennzeichnet, daß die Rückwand (11) des Führerhauses mit einer zweiten Stufenreihe (38) für den Zugang zur Wohnzelle verbunden ist.

5. Führerhaus nach Anspruch 4, dadurch gekennzeichnet, daß die zweite Stufenreihe (38) für den Zugang zur Wohnzelle im Inneren des Führerhauses ist.

6. Führerhaus nach einem der Ansprüche 1 bis 5, dadurch gekennzeichnet, daß der Kocher (31) und der Tisch (34) im mittleren Längsbereich der Wohnzelle hintereinander zwischen den Schlafkojen (35, 35') und neben der ersten Stufenreihe (41) für den Zugang zum Führerstand (20) angeordnet sind.

## Claims

1. A road transport vehicle cabin comprising a driving station (20) having a driving seat (23) and a passenger seat (23') and interoir fittings comprising at least a cooker (31), a wash cubicle (32), a table (34) and berths (35, 35'), and which is divided into two parts which are disposed at two different levels, the upper part being separated from the lower part by a separating partition (27) and communicating with each other by way of a set of steps (41), characterised in that the set of steps (41) is disposed in the longitudinal central region of the cabin while the driving station (20) which is disposed in the upper part has the separating partition (27) supporting the driving and passenger seats (23, 23'), which is extended upwardly to a level higher than said seats (23, 23') and then rearwardly to form the highest level of the ceiling (26) of the lower part which receives the interior fittings.

2. A cabin according to claim 1 characterised in that the highest level of the ceiling (36) of the living cell extends above the table (34), the cubicle (32) and partially above the berths (35, 35').

3. A cabin according to either one of claims 1 or 2 characterised in that the rear face (11) of the cabin is in side-by-side relationship to the cubicle (32).

4. A cabin according to claim 3 characterised in that the rear face (11) of the cabin is in side-by-side relationship to a second set of steps (38) for access to the living cell.

5. A cabin according to claim 4 characterised in that the second set of steps (38) leading to the living cell is within the cabin.

6. A cabin according to any one of claims 1 to 5 characterised in that the cooker (31) and the table (34) are disposed in the longitudinal region of the living cell, one behind the other between the berths (35, 35') and beside the first set of steps (41) leading to the driving station (20).

FIG.1

0 070 748

**FIG.3**

30    27    20    1

23'   23

26

35    35'

**FIG.2**    1    12    38    2

35.

31

41    11

41

35'.    32

33

7